Europäisches Patentamt

(19) European Patent Office

Office européen des brevets

(11) Numéro de publication: **0 221 001**
**A1**

(12) # DEMANDE DE BREVET EUROPEEN

(21) Numéro de dépôt: 86460020.0

(22) Date de dépôt: 13.10.86

(51) Int. Cl.⁴: **B 65 G 65/00**
C 25 D 17/08, B 23 Q 7/10

(30) Priorité: 15.10.85 FR 8515381

(43) Date de publication de la demande:
06.05.87 Bulletin 87/19

(84) Etats contractants désignés: **DE ES GB IT**

(71) Demandeur: **SOCIETE GENERALE DE CAPSULES
SOGECAP (S.A.) Anciens Etablissements
VERON-GIGUEL
13/15 rue Lasson
F-75012 Paris (FR)**

(72) Inventeur: **Homet, Jean-Pierre Thierry Maurice
10, rue de Bretagne
F-53230 Cosse-le-Vivien (FR)**

**Rossignol, Michel
13, rue du Pavé
F-53400 Craon (FR)**

(74) Mandataire: **Martin, Jean-Jacques et al
Cabinet REGIMBEAU Corre, Martin, Schrimpf, Warcoin,
Ahner 11, rue Franz Heller
F-35700 Rennes (FR)**

(54) **Installation et procédé pour la mise en place automatique de capsules sur une grille munie de pinces élastiques.**

(57) Cette installation comprend :

a) un plateau alvéolé adapté pour recevoir des capsules, en nombre et en emplacement correspondant à ceux des pinces élastiques (50) de la grille réceptrice (5), ouvertures dirigées vers le haut ;

b) un cadre (6) adapté pour recevoir et supporter la grille (5) dans une position horizontale ;

c) des moyens (4, 71, 72) agencés pour amener et positionner le plateau alvéolé (1) garni de capsules (C) au-dessous de la grille (5), à l'aplomb de celle-ci ;

d) un coulisseau (7) en forme de U mobile verticalement et adapté pour soulever le plateau (1) préalablement positionné et pour l'amener à proximité de la grille (5) de telle sorte que chaque capsule vienne couffer une pince élastique (50) de cette grille.

L'invention peut être utilisée notamment pour poser sur une grille réceptrice des capsules ou autres objets creux devant être ultérieurement plongés dans un bain d'oxydation anodique

FIG.1

EP 0 221 001 A1

## Description

INSTALLATION ET PROCEDE POUR LA MISE EN PLACE AUTOMATIQUE DE CAPSULES SUR UNE GRILLE MUNIE
DE PINCES ELASTIQUES

La présente invention concerne une installation et un procédé pour la mise en place automatique de capsules placées sur une grille réceptrice munie de pinces élastiques.

Dans les industries produisant des capsules ou autres objets creux en métal ou en matière plastique, par exemple des capsules de fermeture de bouteilles, les capsules venant des postes d'emboutissage et de polissage doivent généralement recevoir des traitements ultérieurs, en particulier des traitements électrochimiques. Il en est ainsi notamment pour les capsules destinées à constituer des bouchons pour des flacons de parfums ou autres produits cosmétiques, qui doivent être plongées dans des bains d'oxydation anodique au cours de leur processus de fabrication, ce traitement visant à améliorer leur état de surface ainsi que leur résistance à la corrosion, et permettant d'obtenir différents coloris et aspects.

Pour ce faire, il est connu de placer une série de capsules sur une grille réceptrice métallique ; la grille, une fois garnie de capsules, est plongée dans les bains puis est retirée lorsque le traitement est terminé ; ensuite, on enlève les capsules de la grille, et celle-ci est réutilisée pour une nouvelle série de capsules à traiter. Ce type de grille est pourvu d'un certain nombre de pinces élastiques, ce nombre correspondant à celui des capsules qu'elle peut recevoir. Chaque pince élastique est adaptée pour se loger à l'intérieur d'une capsule afin de retenir celle-ci par friction. Les pinces élastiques sont généralement réparties en deux séries qui sont situées chacune sur l'une des deux faces de la grille, de manière à en doubler la capacité.

La mise en place des capsules sur les grilles réceptricesse fait jusqu'ici de manière manuelle. A cet effet, l'ouvrier préposé à cette tâche se saisit successivement de la base de chaque pince élastique, provoque la rétraction de cette pince par pression de ses doigts, coiffe la pince d'une capsule, relâche la pince et enfin enfonce complètement la capsule sur la pince de manière à réaliser une solidarisation efficace de la capsule avec la grille.

On comprend aisément qu'il s'agit là d'une opération longue et fastidieuse, exigeant l'emploi d'un personnel nombreux, surtout lorsque l'on a affaire à des productions élevées. Les tentatives d'automatisation faites jusqu'à présent dans ce domaine n'ayant pas donné satisfaction, la présente invention vise à résoudre ce problème.

A cet effet, l'installation qui fait l'objet de la présente invention, destinée à mettre en place automatiquement des capsules sur une grille réceptrice munie de pinces élastiques, est caractérisée en ce qu'elle comporte :

a) un plateau alvéolé ayant les dimensions utiles de la grille réceptrice et comprenant une série d'alvéoles dont le nombre et l'emplacement correspondent à ceux des pinces élastiques, ces alvéoles étant adaptés pour recevoir chacun une capsule, ouverture dirigée vers le haut ;

b) un cadre adapté pour recevoir et supporter ladite grille dans une position horizontale ;

c) des moyens agencés pour amener et positionner le plateau alvéolé garni de capsules au-dessous de ladite grille de telle manière que chacune des capsules se trouve à l'aplomb d'une pince élastique ;

d) un coulisseau mobile verticalement et adapté pour soulever le plateau alvéolé préalablement positionné et l'amener à proximité de la grille de telle sorte que chaque capsule vienne coiffer une pince élastique de cette grille.

Il va de soi que le terme "capsule" utilisé pour raison de commodité de langage dans la description et les revendications ne se limite pas à une capsule de bouteille mais couvre au contraire tous les objets présentant au moins une ouverture, par exemple des cache-valves, cache-pompes, poussoirs, étuis, gaines, frettes, douilles, etc.

Dans un mode de réalisation particulièrement avantageux, cette installation comprend une série de bras écarteurs qui sont adaptés pour rétracter les pinces élastiques afin de faciliter la pose des capsules sur ces pinces.

Selon une caractéristiques additionnelle, les moyens agencés pour amener les plateaux alvéolés sous la grille comprennent une bande sans fin horizontale, mobile pas-à-pas, dont la largeur est inférieure à celle des plateaux, cette bande sans fin étant par ailleurs adaptée pour prélever les plateaux garnis de capsules sur un dispositif de distribution, et pour évacuer les plateaux vides (après transfert des capsules sur la grille) vers un dispositif de réception.

Selon une autre caractéristique de l'invention, les dispositifs de distribution et/ou de réception des plateaux comprennent chacun deux jeux de chaînes sans fin qui sont disposées verticalement de part et d'autre de la bande sans fin et qui sont mobiles pas-à-pas, ces chaînes étant pourvues de taquets adaptés pour supporter les bords des plateaux. Le coulisseau présente avantageusement la forme générale d'un U dont les branches s'étendent verticalement de part et d'autre de la bande sans fin, à proximité immédiate de celle-ci ; les moyens de positionnement des plateaux alvéolés sont montés avantageusement sur les branches de ce coulisseau.

Lorsque l'installation est destinée à transférer des capsules sur une grille réceptrice qui est pourvue de pinces élastiques sur chacune de ses faces, le cadre qui reçoit et supporte cette grille est avantageusement articulé sur un axe horizontal, des moyens étant prévus qui permettent de faire tourner le cadre d'un angle de 180° autour de cet axe.

L'invention a également pour objet un procédé pour la mise en place automatique de capsules sur une grille réceptrice munie de pinces élastiques, ce procédé étant caractérisé en ce qu'il comprend les étapes successives suivantes :

a) on dispose les capsules, ouverture dirigée vers le haut, dans les alvéoles d'un plateau alvéolé dont le nombre et l'emplacement des alvéoles correspondent à ceux des pinces élastiques ;

b) on dispose la grille réceptrice horizontalement, de telle manière que ses pinces élastiques destinées à recevoir les capsules soient dirigées vers le bas ;

c) on positionne au-dessous de la grille réceptrice le plateau alvéolé garni de capsules de telle manière que chacune de ces capsules se trouve à l'aplomb d'une pince élastique ;

d) on soulève le plateau pour l'amener à proximité de la grille réceptrice de telle sorte que chaque capsule vienne coiffer une pince élastique et qu'elle soit retenue par celle-ci ;

e) on abaisse le plateau alvéolé vide.

De préférence, on rétracte provisoirement les pinces élastiques au moment où on vient les coiffer de capsules de manière à faciliter cette opération.

Selon une caractéristique intéressante de ce procédé, on enfonce incomplètement les pinces élastiques à l'intérieur des capsules lorsqu'on a rétracté ces pinces et on réalise dans une étape subséquente l'enfoncement complet, après que les pinces élastiques se soient redépolyées, cet enfoncement complet étant obtenu par un soulèvement supplémentaire du plateau.

Lorsque les grilles réceptrices sont pourvues de pinces élastiques sur leurs deux faces, après que l'une des faces ait été garnie de capsules prélevées sur un premier plateau alvéolé, il est avantageux de retourner la grille en la faisant tourner de 180° autour d'un axe horizontal, afin de transférer, de manière identique, des capsules d'un second plateau alvéolé sur son autre face.

D'autres caractéristiques et avantage de l'invention apparaîtront de la description et des dessins annexés qui en présentent un mode de réalisation préférentiel.

- la figure 1 est une vue générale schématique, en perspective de l'installation ;

- la figure 2 est une vue transversale, partiellement coupée, représentant le dispositif de distribution des plateaux alvéolés garnis de capsules sur la bande sans fin;

- la figure 3 est une vue transversale, en coupe, représentant un plateau alvéolé garni de capsules, disposé sur le coulisseau, au-dessous d'une grille réceptrice portée par le cadre ;

- la figure 4 représente le dispositif de la figure 3, vu par le plan de coupe IV de cette figure ;

- la figure 5 est une vue analogue à la figure 4 montrant le coulisseau en position haute ;

- la figure 6 est une vue analogue aux figures 4 et 5, illustrant le retournement du cadre, après que l'une des deux faces de la grille ait été garnie de capsules ;

- la figure 7 représente le dispositif dans une position similaire à celle de la figure 4, avant soulèvement du plateau destiné à garnir la second face de la grille ;

- les figures 8 à 11 représentent schématiquement et à plus grande échelle, les différentes étapes qui conduisent à la solidarisation des capsules avec une grille :

- les figures 12 et 13 représentent les doigts écarteurs suivant un plan de coupe horizontal, ces bras étant respectivement à l'état rétracté et à l'état expansé.

L'installation représentée sur les dessins comprend un convoyeur constitué par une bande sans fin 4, de type connu ; elle est guidée à ses extrémités par des rouleaux de renvoi 41, l'un de ces rouleaux étant entraîné pas-à-pas par un moteur 40. Sur toute sa longueur, la bande sans fin est supportée et guidée par des moyens usuels appropriés, notamment par des rouleaux d'appui 42.

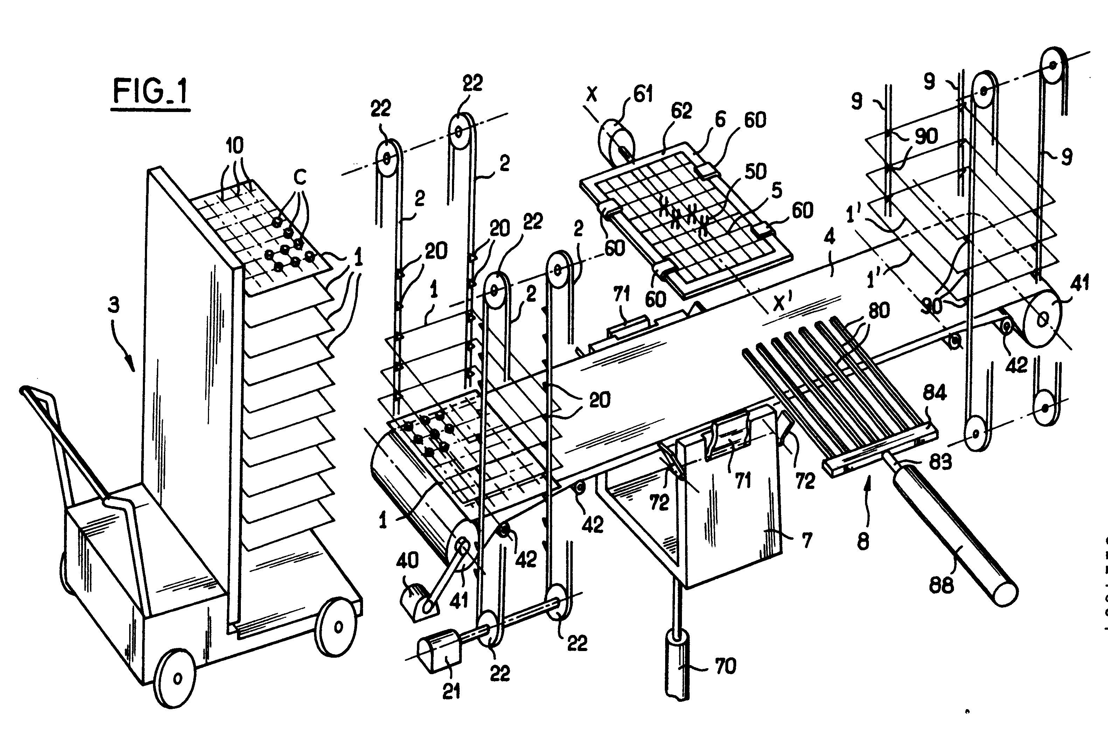

A son extrémité avant -située sur la gauche de la figure 1- la bande 4 est entourée, sur chacun de ses bords latéraux, d'une paire de chaînes sans fin 2, disposée verticalement et située à faible distance de ses bords. Chacune des chaînes sans fin est guidée à ses parties supérieure et inférieure sur des pignons de renvoi 22 d'axe longitudinal, parallèle à la direction de déplacement de la bande. Les chaînes 2 sont reliées cinématiquement entre elles et entraînées dans un mouvement pas-à-pas par un moteur 21, de telle manière que les brins de ces chaînes situés à proximité de la bande 4 se déplacent de haut en bas. Ces chaînes 2 sont munies d'une série de taquets 20 régulièrement répartis sur toute leur longueur; ces chaînes sont calées sur le pignon 22 de telle manière que l'ensemble des taquets 20 des quatre chaînes situées sur les brins intérieurs (brins tournés vers la bande 4) se trouvent situés quatre à quatre dans une série de plans horizontaux superposés et équidistants.

A l'extrémité arrière de la bande sans fin 4 (extrémité située sur la droite de la figure 1) est disposé un dispositif identique à celui qui vient d'être décrit, ce dispositif comprenant deux paires de chaînes 9 munies de taquets 90 ; ce dispositif est entraîné pas-à-pas par un moteur approprié (non représenté) de telle manière que les brins intérieurs des chaînes 9 se déplacent de bas en haut.

Dans la zone centrale de la bande sans fin 4, à une certaine distance au-dessus de cette bande, est disposé un cadre rectangulaire 6 qui est articulé autour d'un axe horizontal X, X' transversal par rapport à la direction de déplacement de la bande 4. Un vérin de rotation 61, pneumatique ou hydraulique, est agencé pour faire tourner le cadre 6 d'un angle de 180° autour de l'axe X, X'. Ce cadre 6 présente sur sa paroi interne, un renfoncement périphérique 62 qui est complémentaire du contour extérieur des grilles 5 destinées à recevoir les capsules. Il est donc possible de loger une grille 5 dans le cadre 6. Après encastrement d'une grille 5 dans le cadre 6, des brides appropriées 60, à commande manuelle ou automatique, viennent assurer la solidarisation complète de la grille 5 avec le cadre 6.

Au-dessous de la bande 4, exactement à l'aplomb du cadre 6, est disposé un coulisseau 7 affectant la forme générale d'un U, dont les banches latérales s'étendent verticalement parallèlement aux bords de la bande 4.

La distance mutuelle de ces deux branches est légèrement supérieure à la largeur de la bande 4, de sorte que celle-ci ne contrarie pas le mouvement de soulèvement et d'abaissement du coulisseau 7 ; ce mouvement est assuré par un vérin à double effet 70.

A la partie supérieure de chacune de ses branches, le coulisseau 7 est équipé de moyens de positionnement et de centrage des plateaux alvéolés 1. Ces moyens comprennent un volet 71 articulé autour d'un axe horizontal longitudinal et une paire de volets 72 articulés autour d'un axe horizontal transversal. Des moyens de commande automatique, qui n'ont pas été représentés dans un simple but de simplification des figures, permettent de faire pivoter ces volets.

Sensiblement dans le même plan horizontal que le cadre 6, en face de celui-ci selon la direction transversale X, X', se trouve un dispositif 8 qui affecte la forme générale d'un peigne. Ce peigne comprend une série de bras écarteurs 80 s'étendant parallèlement les uns aux autres dans un même plan horizontal, suivant la direction X, X'. Les bras 80 sont fixés à l'une de leurs extrémités à une barre transversale 84 ; cette dernière est portée par la tige 83 d'un vérin à double effet 88.

Le nombre des barres 80 est supérieur d'une unité à celui des rangées(vues dans le sens transversal)des pinces élastiques 50 dont est pourvue la grille 5 ; l'écartement mutuel des bras 80 correspond à celui de ces rangées.

Le vérin 88 est représenté à la figure 1 dans sa position rétractée ; lorsque ce vérin se trouve en position d'extension, les bras 20 sont placés sous la grille 5, entre les rangées de pinces élastiques 50, et l'extrémité libre de ces bras est en appui contre le petit côté opposé 62 du cadre 6.

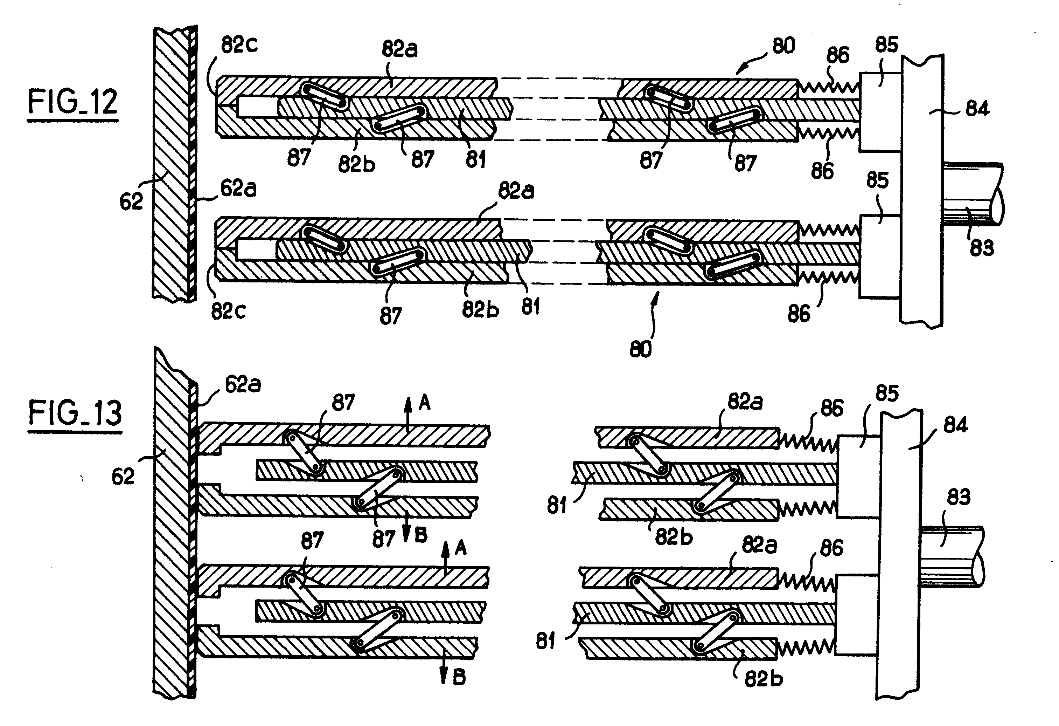

Les figures 12 et 13 sont des vues destinées à montrer la structure des bras écarteurs 80 et à en expliquer le fonctionnement. Chaque bras 80 comprend une tige centrale 81 entourée sur chacun de ses côtés d'une barrette 82a, 82b ; la liaison entre la tige centrale 81 et les barrettes latérales 82a, 82b est assurée par des biellettes articulées 87. Les tiges 81 sont fixées à la barre transversale 84 par l'intermédiaire d'embases 85 servant de siège d'appui pour des ressorts de compression 86 ; ces derniers agissent sur les barrettes latérales 82a, 82b, de manière à les repousser vers l'extrémité libre des bras 80 (extrémité 82 située à la gauche des figures 12 et 13).

Lorsqu'on déplace les bras écarteurs 80, au moyen du vérin à double effet 88, en direction du côté opposé 62 du cadre 6, les bras 80 se trouvent dans la position rétractée de la figure 12 ; quand les extrémités 82c des bras 80 rencontrent la paroi 62, le mouvement des barrettes latérales 82a, 82b est bloqué tandis que la tige centrale 81 continue son mouvement, provoquant la compression des ressorts 86 ; les barrettes latérales sont alors obligées de s'écarter de la tige centrale 81, provoquant l'expansion des bras 80 (flèches A et B,figure 13). On notera que la paroi d'appui 62 est garnie d'une couche 62a de matériau anti-friction, par exemple en nylon, destinée à faciliter le glissement des faces frontales 82c des barrettes latérales 82a, 82b lors de leur écartement.

L'installation qui vient d'être décrite est utilisée de la manière suivante :

Les capsules C qui proviennent du poste de fabrication situé en aval, en l'occurrence le poste d'emboutissage ou de polissage des capsules, sont amenées dans l'installation au moyen d'un chariot 3 recevant une série de plateaux alvéolés 1 superposés. Dans l'exemple représenté chaque plateau 1 comprend quarante-huit alvéoles 10 répartis selon six rangées transversales de huit alvéoles ; dans chaque alvéole se trouve une capsule C dont l'ouverture est dirigée vers le haut.

Au moyen du chariot de manutention 3 on place l'ensemble des plateaux 1 sur les taquets 20 du dispositif récepteur à chaînes 2.

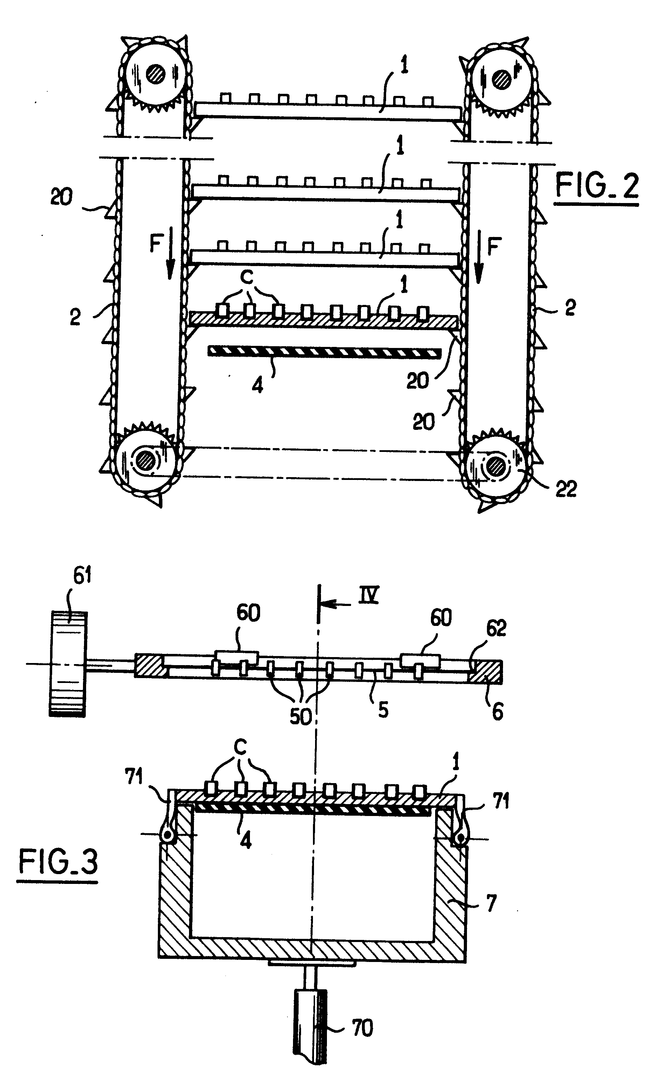

Les chaînes 2 étant mises en route, elles font descendre pas-à-pas les plateaux 1 de manière à les déposer successivement sur le tapis 4. Le mouvement de descente des plateaux 1 est figuré par les flèches F à la figure 2. Le plateau 1 déposé sur la bande 4 est ensuite amené par celle-ci dans la zone centrale où se trouve le coulisseau 7 ; les faces supérieures (horizontales) des branches de ce coulisseau se trouvent situées sensiblement dans le même plan que la face supérieure de la bande sans fin 4. Le mouvement de la bande 4 est arrêté lorsque le plateau 1 est arrivé exactement au-dessus de ce coulisseau ; à ce moment les volets de centrage 71, 72 sont actionnés, de manière à venir serrer les bords du plateau 1, celui-ci se trouvant ainsi solidarisé avec le coulisseau 7 ; dans le cadre 6 situé au-dessus du coulisseau 7, on a mis en place une grille 5 destinée à recevoir les capsules C ; cette grille possède sur chacune de ses deux faces une série de pinces élastiques, dont le nombre (48) et l'emplacement correspondent exactement à ceux des alvéoles 10 du plateau 1 ; la forme des pinces, qui dépend de la forme des capsules à traiter, est telle que ces pinces peuvent être introduites à l'intérieur des capsules et les retenir par friction, en raison de leur élasticité.

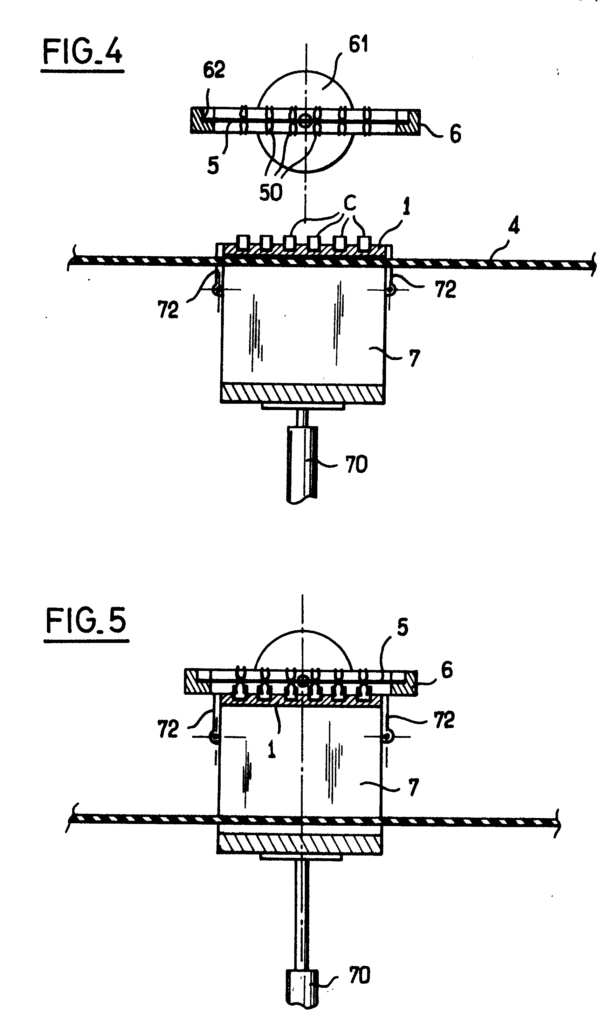

La grille réceptrice 5 se trouvant dans une position horizontale, parfaitement solidaire du cadre 6 (grâce aux brides 60), on fait monter le coulisseau 7 en direction du cadre 6 au moyen du vérin 70. Ce mouvement du coulisseau est possible grâce à sa forme en U encadrant la bande 4. La figure 5 représente le coulisseau 7 dans sa position haute, dans laquelle chaque capsule C est venue coiffer une pince élastique 50.

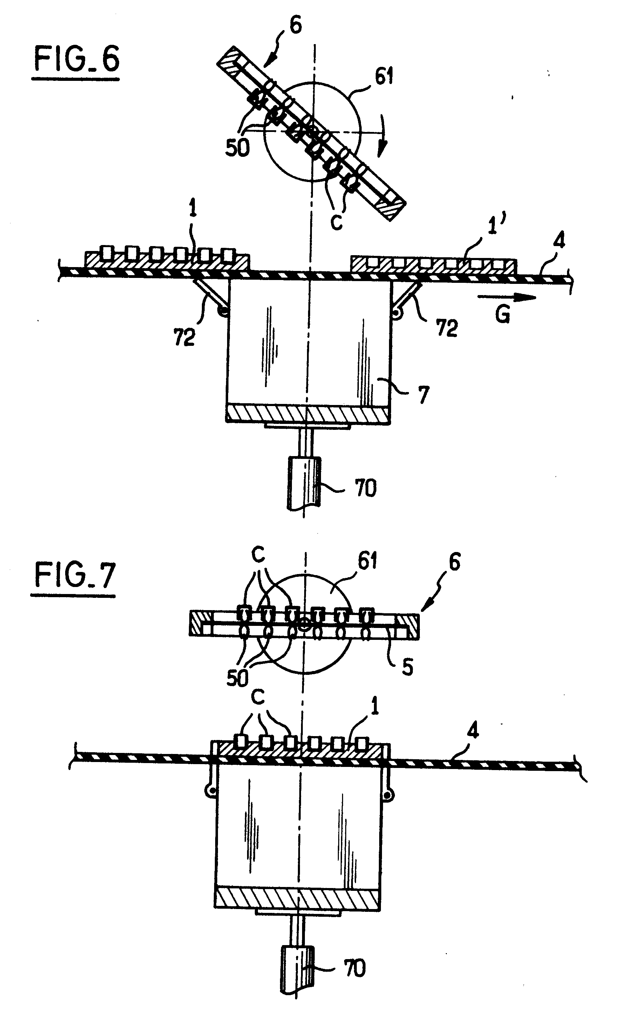

A la figure 6, le coulisseau 7 a repris sa position basse, redéposant le plateau vide 1' sur le tapis 4, tandis que les capsules C ont été retenues par les pinces 50. Les volets de positionnement 71, 72 se sont rabattus de manière à libérer le plateau vide 1' ; la bande 4 s'est remise en route de manière à évacuer le plateau vide 1' et à amener un nouveau plateau 1 sur le coulisseau 7 ; ce mouvement est figuré par la flèche G à la figure 6. Pendant ce temps le vérin rotatif 61 fait tourner de 180° autour de l'axe transversal X, X' le cadre 6, de manière à amener en position de réception les pinces élastiques 50 équipant l'autre face de la grille 5.

A la figure 7 la seconde face de la grille 5 est prête à recevoir les capsules garnissant un nouveau plateau 1.

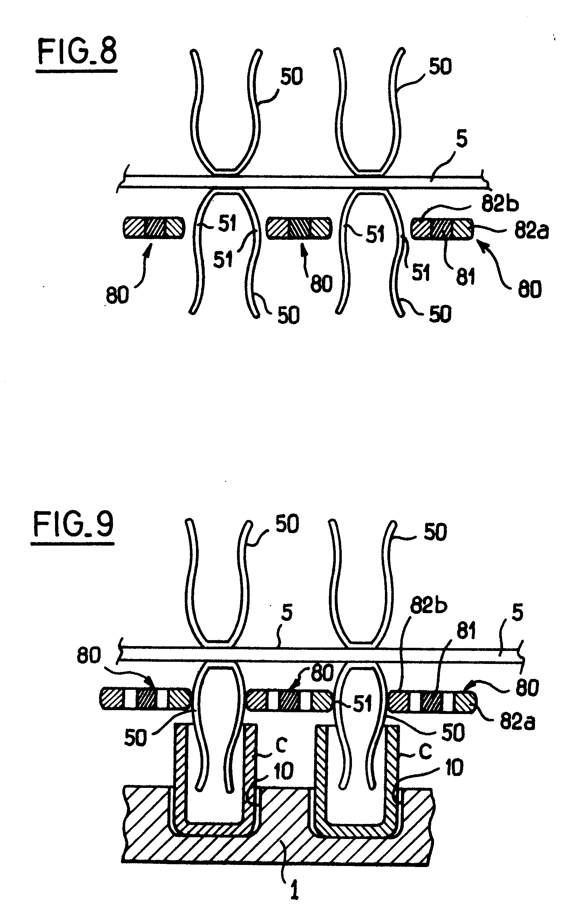

Les figures 8 à 11 sont des vues à plus grande échelle destinées à montrer en détail la manière dont les capsules C sont posées sur les pinces élastiques 50, et à montrer le rôle des bras écarteurs décrits précédemment.

A la figure 8 les bras 80 ont été mis en place entre les rangées de pinces élastiques 50, par extension du vérin 88 ; ces bras écarteurs sont situés au niveau de la base renflée 51 des doigts 50.

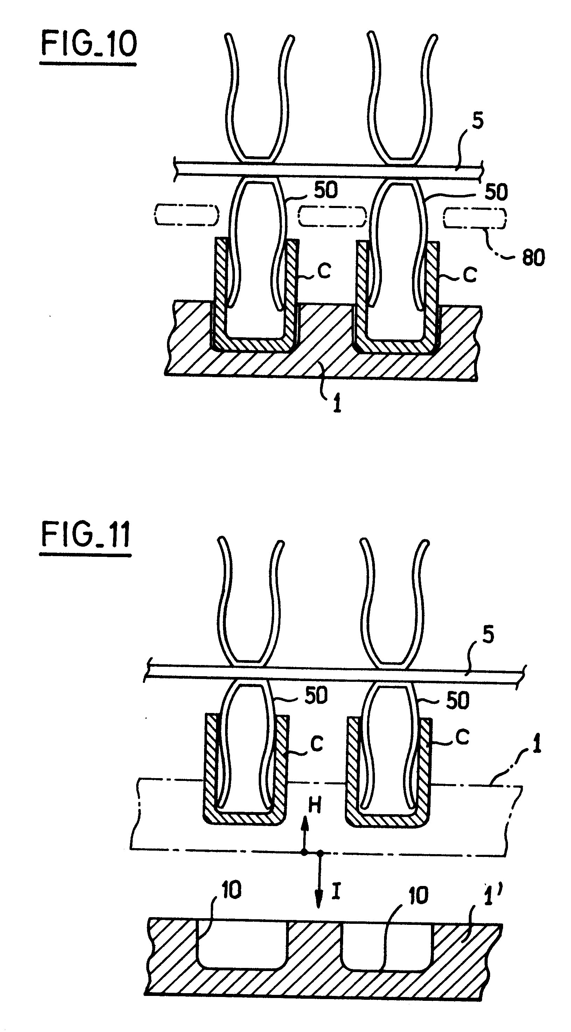

Avant que le plateau 1 n'arrive en position haute, on provoque l'écartement des barrettes 82a, 82b, en amenant les extrémités 82c des bras 80 contre la paroi 62 du cadre 6 ; ces barrettes 82a, 82b agissent ainsi sur la base des pinces 50 en les refermant, ce qui facilite la mise en place des capsules C (voir figure 9). Le mouvement de soulèvement du plateau 1 est limité ou non, si bien qu'à ce stade de l'opération les pinces 50 sont ou ne sont pas complètement enfoncées dans les capsules C. On réalise alors le retrait des bras 80 par rétraction du vérin à double effet 88 ; durant cette rétraction, les ressorts 86 provoquent le rappel des barrettes 82a, 82b dans leur position de la figure 12 et autorisent le redéploiement élastique des pinces 50, de sorte que celles-ci viennent porter contre la paroi intérieure des capsules C. Les bras 80 en cours de rétraction sont figurés en traits mixtes fins à la figure 10. Après que les bras écarteurs 80 aient été retirés, le vérin 70 provoque un petit soulèvement supplémentaire du coulisseau 7 et du plateau 1 porté par celui-ci, de manière à enfoncer complètement les pinces élastiques 50 à l'intérieur des capsules C et améliorer la qualité de retenue de ces capsules sur la grille 5 ; ce soulèvement additionnel du plateau 1, qui n'a lieu que si nécessaire, est figuré par la flèche H à la figure 11 ; ensuite le vérin 70 réalise la descente du plateau vide 1' (flèche I) de manière à redéposer ce plateau sur la bande sans fin 4 qui les dirige vers le dispositif à chaînes 9 où ils sont stockés provisoirement, puis évacués à l'aide du chariot 3. Lorsque la grille 5 a été garnie sur ses deux faces de capsules, cette grille est changée manuellement par ouverture des brides 60 et est remplacée par une grille vide.

Les différents moteurs et vérins d'entraînement 40 de la bande sans fin 4, 21 des chaînes 2, 70 du coulisseau 7, 61 de la grille 62, 88 du dispositif à bras écarteurs 8, ainsi que le moteur d'entraînement des chaînes réceptrices 9, sont naturellement commandés en synchronisme selon une séquence prédéterminée, par des moyens à portée de l'homme de métier, ces moyens n'ayant pas été représentés dans un but de simplification.

Il va de soi que la présente invention n'est pas limitée au mode de réalisation préférentiel qui vient d'être décrit à simple titre d'exemple ; elle en englobe au contraire toutes les variantes.

L'invention est adaptée à des capsules ou autres objets creux de formes diverses et non seulement cylindriques comme représenté sur les figures ; c'est ainsi qu'il est naturellement possible de prélever sur les plateaux 1 des objets de formes diverses, par exemple sphériques ou de section ovale ; il suffit pour cela de prévoir sur les grilles 5 des pinces élastiques de formes correspondantes.

Par ailleurs, bien que l'invention ait été conçue pour le transfert de capsules métalliques sur des grilles destinées à être plongées dans des bains d'oxydation anodique, l'installation et le procédé faisant l'objet de la présente invention pourraient être utilisés dans d'autres domaines d'application, par exemple pour des pièces creuses en matière plastique devant recevoir un traitement galvanoplastique.

**Revendications**

1. Installation pour la mise en place automatique de capsules sur une grille réceptrice munie de pinces élastiques, caractérisée en ce qu'elle comporte :

a) un plateau alvéolé (1) ayant les dimensions utiles de la grille réceptrice (5) et comprenant une série d'alvéoles (10) dont le nombre et l'emplacement correspondent à ceux des pinces élastiques (50), ces alvéoles étant adaptés pour recevoir chacun une capsule (C), ouverture dirigée vers le haut ;

b) un cadre (6) adapté pour recevoir et supporter ladite grille (5) dans une position horizontale ;

c) des moyens (4 ; 71, 72) agencés pour amener et positionner le plateau alvéolé (1) garni de capsules (C) au-dessous de ladite grille (5) de telle manière que chacune de ces capsules (C) se trouve à l'aplomb d'une pince élastique (50) ;

d) un coulisseau (7) mobile verticalement et adapté pour soulever le plateau alvéolé (1) préalablement positionné et l'amener à proximité de la grille (5) de telle sorte que chaque capsule vienne coiffer une pince élastique (50) de cette grille.

2. Installation selon la revendication 1, caractérisée par le fait qu'elle comprend une série de bras écarteurs (80) adaptés pour rétracter les pinces élastiques (50) afin de faciliter la pose des capsules (C) sur ces pinces.

3. Installation selon l'une des revendications 1 ou 2, caractérisée par le fait que les moyens agencés pour amener les plateaux alvéolés (1) sous la grille (5) comprennent une bande sans fin horizontale (4), mobile pas-à-pas, dont la largeur est inférieure à celle des plateaux (1), cette bande sans fin étant par ailleurs adaptée pour prélever les plateaux (1) garnis de capsules sur un dispositif de distribution et pour évacuer les plateaux vides (1') vers un dispositif de réception.

4. Installation selon la revendication 3, caractérisée par le fait que les dispositifs de distribution et/ou de réception des plateaux (1) comprennent chacun deux jeux de chaînes sans fin (2, respectivement 9) disposées verticalement de part et d'autre de la bande sans fin (4) et mobiles pas-à-pas, ces chaînes (2, 9) étant pourvues de taquets (20, 90) adaptés pour supporter les bords des plateaux (1, 1').

5. Installation selon l'une des revendications 3 ou 4, caractérisée par le fait que ledit coulisseau (7) présente la forme générale d'un U dont les branches s'étendent verticalement de part et d'autre de la bande sans fin (4), à proximité immédiate de celle-ci.

6. Installation selon la revendication 5, caractérisée par le fait que les moyens de positionnement (71, 72) des plateaux alvéolés sont montés sur les branches dudit coulisseau (7).

7. Installation selon l'une des revendications 1 à 6, adaptée pour transférer des capsules sur une grille réceptrice (5) qui est pourvue de pinces élastiques (50) sur chacune de ses deux faces, caractérisée par le fait que le cadre (6) recevant et supportant ladite grille (5) est articulé sur un axe horizontal, des moyens (61) étant prévus qui permettent de faire tourner le cadre (6) d'un angle de 180° autour de cet axe.

8. Procédé pour la mise en place automatique de capsules sur une grille réceptrice munie de pinces élastiques caractérisé en ce qu'il comprend les étapes suivantes :

    a) on dispose les capsules, ouverture dirigée vers le haut, dans les alvéoles (10) d'un plateau alvéolé (1) dont le nombre et l'emplacement des alvéoles correspondent à ceux des pinces élastiques (50) ;

    b) on dispose la grille réceptrice (5) horizontalement, de telle manière que ses pinces élastiques (50) destinées à recevoir les capsules soient dirigées vers le bas ;

    c) on positionne au-dessous de la grille réceptrice (5) le plateau alvéolé (1) garni de capsules (C) de telle manière que chacune de ces capsules (C) se trouve à l'aplomb d'une pince élastique (50) ;

    d) on soulève le plateau (1) pour l'amener à proximité de la grille réceptrice (5) de telle sorte que chaque capsule vienne coiffer une pince élastique (50) et qu'elle soit retenue par celle-ci ;

    e) on abaisse le plateau alvéolé vide (1').

9. Procédé selon la revendication 8, caractérisé en ce qu'on rétracte provisoirement les pinces élastiques (50) au moment où on vient les coiffer des capsules (C) de manière à faciliter cette opération.

10. Procédé selon la revendication 9, caractérisé en ce qu'on enfonce incomplètement les pinces élastiques (50) à l'intérieur des capsules (C) lorsqu'on a rétracté ces pinces et qu'on réalise dans une étape subséquente l'enfoncement complet, après que les pinces élastiques (50) se soient redéployé, cet enfoncement complet étant obtenu par un soulèvement supplémentaire du plateau (1).

11. Procédé selon l'une des revendications 8 à 10, qui est adapté à des grilles réceptrices (5) pourvues de pinces élastiques (50) sur leurs deux faces, caractérisé par le fait que, après que l'une des faces d'une grille (5) ait été garnie de capsules (C) prélevées sur un premier plateau alévolé (1), on retourne cette grille en la faisant tourner de 180° autour d'un axe horizontal, et on transfère de manière identique des capsules (C) d'un second plateau alvéolé sur son autre face.

## FIG_1

FIG.2

FIG.3

FIG.4

FIG.5

0221001

FIG.6

FIG.7

FIG.8

FIG.9

FIG_10

5

50

50

80

C

C

1

FIG_11

5

50

50

C

C

1

H

I

10

10

1'

FIG_12

FIG_13

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | FR-A-2 537 956  (E.M. POLES)<br><br>* Revendications 1-5; figures 1,2 * | 1,3,4,<br>8 | B 65 G  65/00<br>C 25 D  17/08<br>B 23 Q   7/10 |
| A | | 6 | |
| A | US-A-3 856 290  (D.H. JENSEN et al.)<br>* Colonne 1, lignes 29-59; figures 4-6 * | 1,2,8-<br>11 | |
| A | CH-A- 486 731  (FABRIQUE DE MONTRES ROTARY SA)<br>* Colonne 4, lignes 33-47; figure 1 * | 1,8 | |
| A | FR-A-2 534 154  (CHARVO SA)<br><br>* Revendication 1; figures 1,3 * | 1,3,4,<br>8 | DOMAINES TECHNIQUES RECHERCHES (Int Cl 4)<br><br>B 23 Q<br>B 65 G |
| A | US-A-2 818 987  (R.F. KRUPP et al.)<br>* Figures 1,4,5,10 * | 1,8 | H 05 K<br>B 65 B<br>C 25 D |
| A | FR-A-2 312 003  (LAEIS-WERKE AG)<br>* Figures 1-3 *<br><br>---        -/- | 1,6 | |

Le present rapport de recherche a été établi pour toutes les revendications

| Lieu de la recherche | Date d'achèvement de la recherche | Examinateur |
|---|---|---|
| LA HAYE | 13-01-1987 | BELIBEL C. |

## DOCUMENTS CONSIDERES COMME PERTINENTS

Page 2

| Catégorie | Citation du document avec indication. en cas de besoin. des parties pertinentes | Revendication concernée | CLASSEMENT DE LA DEMANDE (Int. Cl.4) |
|---|---|---|---|
| A | US-A-3 753 509 (R.W. KOCK)<br><br>* Figures 3-10 *<br><br>--- | 1,7,8,<br>11 | |
| A | IBM TECHNICAL DISCLOSURE BULLETIN, vol. 9, no. 5, octobre 1966, pages 548-549, New York, US; C.G. METREAUD: "Article handling apparatus"<br>* Figures 1-3 *<br><br>----- | 1,2,8,<br>9 | |
| | | | DOMAINES TECHNIQUES RECHERCHES (Int. Cl.4) |

Le present rapport de recherche a été etabli pour toutes les revendications

| Lieu de la recherche | Date d'achèvement de la recherche | Examinateur |
|---|---|---|
| LA HAYE | 13-01-1987 | BELIBEL C. |